# EUROPEAN PATENT APPLICATION

(11) **EP 0 764 649 A2**
(43) Date of publication of application: **26.03.1997**
(21) Application number: 96112645.5
(22) Date of filing: 06.08.1996
(51) Int. Cl.: C07F 7/22, C08F 10/00, C07F 3/00, C07F 5/00, C07F 5/06

(54) **Preparation of organometal compounds and their use in olefin polymerisation processes**

(30) Priority: 21.09.1995 US 4119
(71) Applicant: Witco GmbH, 59192 Bergkamen (DE)
(72) Inventor: Gürtzgen, Stefan, Dr., 42369 Wuppertal (DE); Rieger, Rainer, Dr., 44534 Lünen (DE); Uzick, Wolfram, Dr., 58239 Schwerte (DE); Eisch, John J., State University of New York, Binghamton, New York 13902-6000 (US); Mackenzie, Katrin, Dr., 04683 Naunhof (DE)

(57) **Zusammenfassung**

Es werden neue, bimetallische metallorganische Verbindungen, deren Synthese und Anwendung in Polymerisationskatalysatorsystemen auf Grundlage der Kombination derartiger neuer, bimetallischer metallorganischer Verbindungen mit Übergangsmetallkomplexen bereitge-stellt.

## Description

Die vorliegende Erfindung betrifft neue metallorganische Verbindungen mit mindestens zwei Metallzentren am Kohlenstoffgerüst des Moleküls, die sich entweder am gleichen Kohlenstoff (geminal), an benachbarten Kohlenstoffen (vicinal) oder an Kohlenstoffen, die durch ein oder mehr Kohlenstoffatome voneinander getrennt sind - wobei sie einander aber räumlich nah sind - befinden, und ein Verfahren zu ihrer Synthese.

Ein weiterer Gegenstand der vorliegenden Erfindung ist ein Katalysatorsystem zur Polymerisation von Verbindungen mit ungesättigter Kohlenstoff-Kohlenstoff-Bindung, das die obengenannte metallorganische Verbindung und einen Übergangsmetallkomplex enthält. Gegenstand der Erfindung ist ferner ein Verfahren zur Polymerisation von ungesättigten Monomeren, wie z. B. Olefinen, konjugierten und nichtkonjugierten Dienen, Acetylenen, Vinylhalogeniden, Vinylethern und Vinylestern, unter Polymerisationsbedingungen und unter Verwendung des obengenannten erfindungsgemäßen Katalysatorsystems.

Bekanntlich bilden bestimmte Aluminiumalkyle, wie Ethylaluminiumchloride in Verbindung mit Titantetrachlorid, heterogene Olefinpolymerisationskatalysatoren, wie aus K.Ziegler, Angewandte Chemie, 67, (1955), Seite 213, und Natta et al., J. Am. Chem. Soc., 77, (1955), Seite 1708, hervorgeht. Die US-PS 2,827,446 von Breslow stellt eine modifizierte Version dieser Katalysatoren der ersten Generation bereit, bei der als Cokatalysator anstelle von Diethylaluminiumchlorid Triethylaluminium verwendet wurde.

Bei typischen Ziegler-Natta-Katalysatoren handelt es sich ausnahmslos um heterogene Systeme, bei denen demzufolge komplizierte Oberflächenphänomene einen starken Einfluß auf die Katalysatorleistung ausüben. Man hat vielfach versucht, die Leistung dieser sogenannten Multiple-Site-Katalysatoren zu erklären und auch zu modifizieren.

Dabei spielte der sehr frühe Ansatz von G. Natta, Chem. Ind, 39, (1957), Seite 1032, und Breslow u. a., J. Am. Chem. Soc., 79, (1957), Seite 5073, ebenda 81 (1989), Seite 81, die den Mechanismus der Ziegler-Natta-Katalyse in homogenen Medien an einem System aus löslicher Übergangsmetallverbindung und Aluminiumalkyl untersuchten, eine wichtige Rolle.

Dabei stellte sich heraus, daß die Kombination von Diethylaluminiumchlorid und Titanocendichlorid zwar einen Ethylenpolymerisationskatalysator ergab, dieser jedoch im Vergleich zu den heterogenen Ziegler-Natta-Katalysatoren eine wesentlich geringere Aktivität aufwies.

Den nächsten bedeutenden Fortschritt in der Olefinpolymerisationskatalyse machten H. Sinn und W. Kaminsky mit der Entdeckung, daß teilhydrolysierte Aluminiumalkyle, die sogenannten Aluminoxane, für Übergangsmetallkomplexe vom Metallocen-Typ hochwirksame Cokatalysatoren darstellen. Hierbei ergab insbesondere die Kombination von Metallocenen auf Basis von Zirkonium, Titan und Hafnium mit Methylaluminoxan (MAO) Polymerisationskatalysatoren, die im Vergleich zu den üblichen heterogenen Ziegler-Natta-Katalysatoren bei zahlreichen Olefinpolymerisationsreaktionen weit aktiver waren (siehe Sinn u. a., Angew. Chem., 92, (1980), Seite 39).

Neben ihrer äußerst hohen Polymerisationsaktivität weisen die Metallocen-Methylaluminoxan-Katalysatoren von Kaminsky und Sinn weitere vorteilhafte Merkmale auf, u. a. Zugang zu hinsichtlich ihrer chemischen, physikalischen und mechanischen Eigenschaften neuen Polymermodifikationen, Zugang zu neuen Polymerstrukturen z. B. unter Einbau von speziellen Comonomeren, hochstereoselektive Polymerisation und Verringerung von unerwünschter Nebenproduktbildung.

Aufgrund dieser bedeutenden Vorteile haben die "Single-Site"-Katalysatoren auf Metallocenbasis in der industriellen Olefinpolymerisation eine technologische Revolution in Gang gesetzt, deren Ausmaß sich in der schnell wachsenden Zahl an Veröffentlichungen auf diesem Gebiet niederschlägt.

Trotz der obengenannten zahlreichen Vorteile bringt der spezielle Einsatz von MAO als Cokatalysator für Metallocene einige Probleme mit sich. So ist beispielsweise zur Erzielung einer zufriedenstellenden Polymerisationsaktivität ein beträchtlicher Überschuß Methylaluminoxan in bezug auf die verwendete Menge an Metallocen erforderlich. Dabei beträgt das Molverhältnis von Übergangsmetall zu Aluminium in der Regel 1 : 100 bis 1 : 2000. Da MAO nur in aromatischen Kohlenwasserstoffen leicht löslich ist, ist außerdem der Einsatz dieser meist unerwünschten Lösungsmittel bei homogenen Polymerisationsverfahren unumgänglich.

Eine weitere Komplikation bei der Verwendung von MAO ergibt sich aus der nur begrenzten Haltbarkeit von Lösungen des Methylaluminoxans: Derartige MAO-Lösungen können unter Gelbildung altern und so die Herstellung homogener Katalysatorsysteme erschweren.

Aufgrund der Bedeutung von Single-Site-Katalysatoren wurde intensiv versucht, den mit MAO verbundenen Schwierigkeiten durch Modifizierung von MAO durch Einbau höherer Alkylgruppen, d. h. Isobutylgruppen, oder durch Trägerung des Cokatalysators auf Siliciumdioxid oder anderen anorganischen Trägern abzuhelfen.

Auch wenn man durch diese Modifikationen der Cokatalysatoren letztendlich die meisten der obengenannten Probleme lösen kann, können dabei doch ihrerseits andere Probleme auftauchen, nämlich die geringere Polymerisationsaktivität von MAO, das durch Einbau höherer Alkylgruppen modifiziert wurde, und die Unlöslichkeit von geträgertem MAO, durch die dessen Anwendbarkeit auf Suspensions- und Gasphasenverfahren beschränkt wird.

Es wurde auch schon versucht, MAO durch ionische Komplexe auf Basis von Perfluorphenylborverbindungen, z. B. NH₄⁺[B(C₆F₅)₄]⁻_{,} oder Tris(pentafluorphenyl)boran zu ersetzen und damit das Metallocen in einen aktiven, homogenen Olefinpolymerisationskatalysator zu überführen.

Dabei besteht der Hauptvorteil derartiger Systeme darin, daß man mit einem stöchiometrischen Verhältnis von Metallocen zu Aktivator von nahezu 1 : 1 hohe Polymerisationsaktivität erhält. Diese Systeme sind jedoch mit bestimmten Nachteilen verbunden, unter anderem, sind derartige Katalysatorsysteme gegenüber bei der großtechnischen Produktion unvermeidbaren Verunreinigungen sehr empfindlich. Dazu ist zu bemerken, daß die Gegenwart derartiger Verunreinigungen schwerwiegende Probleme bei der zuverlässigen und reproduzierbaren Durchführung der Polymerisation aufwerfen kann. Ferner sind einige bororganische Verbindungen toxikologisch bedenklich, was für Anwendungen der erhaltenen Polymere bei Lebensmittelverpackungen unerwünscht ist.

Angesichts der bei den bisher bekannten Polymerisationskatalysatoren anzutreffenden Nachteile besteht immer noch Bedarf an verbesserten, vielseitigen und leistungsfähigen Olefinpolymerisationskatalysatoren.

Insbesondere besteht immer noch Bedarf an neuen "Single-Site"-Katalysatoren, die sich durch verbesserte Eigenschaften wie hohe Polymerisationsaktivität, guten Comonomereinbau, hohe Stereoselektivität der Polymerisation unter geringerer Nebenproduktbildung, hervorragende mechanische Eigenschaften und ausgezeichnete Verarbeitbarkeit auszeichnen.

Es wurde nun gefunden, daß bestimmte metallorganische Verbindungen in Kombination mit Übergangsmetallkomplexen hochaktive Olefinpolymerisationskatalysatoren ergeben. Diese neuen, erfindungsgemäßen metallorganischen Verbindungen sind dadurch gekennzeichnet, daß sie mindestens zwei Metallzentren am Kohlenstoffgerüst des Moleküls, die sich entweder am gleichen Kohlenstoff (geminal), an benachbarten Kohlenstoffen (vicinal) oder an Kohlenstoffen, die durch ein oder mehr Kohlenstoffatome voneinander getrennt sind - wobei sie einander aber räumlich nah sind - befinden, enthalten.

Insbesondere im letzteren Fall bringt die dreidimensionale Anordnung der Atome im Molekül die Metallzentren in räumliche Nähe zueinander, so daß sie konzertiert als lewissaure Zentren fungieren können. Die Metallzentren können verschiedenster Art sein, es handelt sich dabei jedoch bevorzugt um ein Hauptgruppenmetall der Gruppen 2, 13 und 14 des Periodensystems, wobei diese Nomenklatur der neuen, erweiterten Version des Periodensystems mit von links nach rechts mit den Zahlen 1 bis 18 durchnumerierten, vertikalen Spalten oder Gruppen entspricht; siehe Van Nostrand's Scientific Encyclopedia, 7. Ausgabe, 1989, Seite 2158 und 2159.

Bei den Übergangsmetallkomplexen handelt es sich um Komplexe vom Metallocentyp, die aus Sandwich-Strukturen ausgewählt sind, bei denen ein vierwertiges Übergangsmetall über π-Bindungen an zwei gegebenenfalls substituierte Cyclopentadienyl-, Indenyl- oder Fluorenylliganden und über σ-Bindungen an zwei weitere Gruppen gebunden ist. Die Übergangsmetallkomplexe können auch aus Halbsandwich-Strukturen ausgewählt sein, bei denen ein vierwertiges Übergangsmetall über eine π-Bindung an einen gegebenenfalls substituierten Cyclopentadienyl-, Indenyl- oder Fluorenylliganden und über σ-Bindungen an drei weitere Gruppen gebunden ist.

Aufgrund der obengenannten Strukturmerkmale der Übergangsmetallkomplexe und der metallorganischen Verbindung kann letztere Komponente einen Lewissäure-Chelateffekt auf den Übergangsmetallkomplex ausüben und so koordinativ ungesättigte, neutrale oder kationische Übergangsmetallzentren erzeugen, die die Polymerisation eines ungesättigten organischen Monomers herbeiführen.

Die unerwartete Polymerisationsaktivität des erfindungsgemäßen Katalysatorsystems in bezug auf ungesättigte organische Monomere, insbesondere Olefine, fällt ebenfalls in den Schutzbereich der vorliegenden Erfindung.

Gegenstand der vorliegenden Erfindung ist auch ein Verfahren zur Synthese der obengenannten metallorganischen Verbindungen durch regioselektive elektrophile Substitution und Metall-Metall-Austauschreaktionen. Dazu ist zu bemerken, daß man mit den bei der vorliegenden Erfindung eingesetzten Synthese- und Aufarbeitungsmethoden sowohl die obengenannten Strukturmerkmale als auch den für den Einsatz als Cokatalysatoren bei Ziegler-Natta-Polymerisationen erforderlichen entsprechenden Reinheitsgrad der Zielverbindungen erhält.

Wie oben bereits ausgeführt, betrifft die vorliegende Erfindung neue metallorganische Verbindungen mit mindestens zwei Hauptgruppenmetallzentren der Gruppen 2, 13 und 14 des Periodensystems, ihre Synthese sowie ihre Anwendung als Olefinpolymerisationscokatalysatoren in Verbindung mit bestimmten Übergangsmetallkomplexen.

Insbesondere beschreibt die vorliegende Erfindung die bevorzugten Molekularstrukturen der neuen metallorganischen Verbindungen als 1,1- und 1,2-dimetallierte, gesättigte und olefinische Kohlenwasserstoffe und Benzolderivate mit einer der folgenden Strukturformeln (I), (II) oder (III): 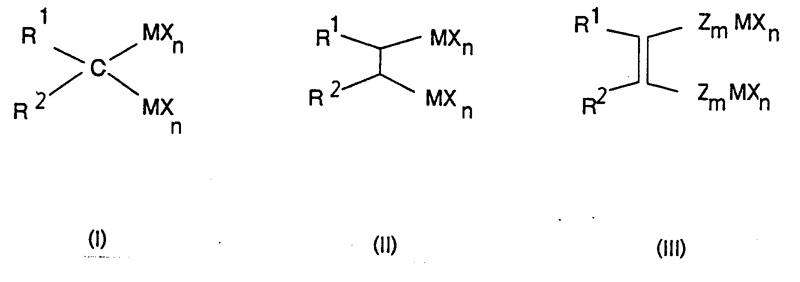 worin M ein zweiwertiges, dreiwertiges oder vierwertiges Metall der Gruppen 2, 13 oder 14 des Periodensystems, z. B. Mg, B, Sn und vorzugsweise Al; R¹ und R² unabhängig Wasserstoff oder gegebenenfalls weiter substituierte, langkettige, verzweigte oder cyclische Alkylgruppen oder ein cyclisches Gerüst, bei dem R¹ und R² eine gegebenenfalls gesättigte, ungesättigte, substituierte oder unsubstituierte cyclische Struktur bilden; X ein Halogen (Cl, Br, F) oder eine gegebenenfalls substituierte Methylgruppe, Alkylgruppe oder eine gegebenenfalls substituierte Phenyl- oder Benzylgruppe; n bei zweiwertigen Metallen 1, bei dreiwertigen Metallen 2 und bei vierwertigen Metallen 3; Z eine Methylengruppe (-CH₂-) und m 0, 1 oder 2 bedeuten.

Typische Beispiele für den obigen Strukturformeln entsprechende metallorganische Verbindungen sind u. a.
- Formel (I):: Bis(chloro(methyl)alumino)methan
- Formel (II):: 1,2-Bis(chloro(methyl)alumino)ethan
- Formel (III):: cis-1,2-Bis(chloro(methyl)alumino)ethen, 1,2-Bis(chloro(methyl)alumino)benzol.

Diese Beispiele sollen den lewissauren und chelatisierenden Charakter der erfindungsgemäßen metallorganischen Verbindungen veranschaulichen.

Da diese Verbindungen bisher nicht beschrieben sind, stellt die vorliegende Erfindung auch ein Verfahren zur Synthese derartiger Verbindungen bereit.

Gemäß der vorliegenden Erfindung setzt man in der Regel einen dihalogenierten Kohlenwasserstoff z. B. mit metallischem Magnesium in einem Ether als Lösungsmittel zu einem Di-Grignard-Reagens um. Außerdem ist eine einer derartigen Grignard-Reaktion analoge Umsetzung mit metallischem Lithium oder einem Alkyllithium-Reagens in einem Ether oder einem Kohlenwasserstoff als Lösungsmittel möglich.

Das so gewonnene metallorganische Zwischenprodukt kann dann entweder direkt oder über sein Bor-, Zinn- oder Siliciumderivat durch Metall-Metall-Substitution und sorgfältige Aufarbeitung in das Zielmolekül überführt werden. Derartige Herstellungsverfahren sind in den erfindungsgemäßen Beispielen ausführlich erläutert.

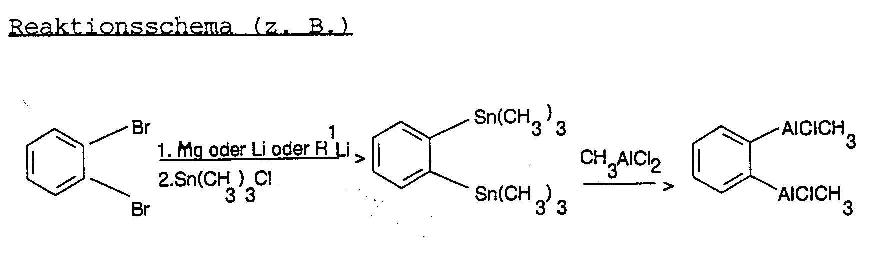

Wie oben bereits ausgeführt, können die neuen metallorganischen Verbindungen spezielle Übergangsmetallkomplexe so aktivieren, daß die Polymerisation von ungesättigten Verbindungen sehr effektiv herbeigeführt wird. Aus dem Stand der Technik ist bekannt, daß Übergangsmetallkomplexe vom Metallocentyp aktive Spezies für die Olefinpolymerisation bilden, wenn man sie z.B. mit Aluminiumalkylen oder Borverbindungen umgesetzt.

Der Einsatz von bimetallischen Molekülen als Cokatalysatoren für Metallocene oder verwandte Übergangsmetallverbindungen ist jedoch bisher nirgendwo beschrieben. Gegenstand der vorliegenden Erfindung ist daher auch die Bildung hochaktiver Polymerisationskatalysatoren, die eine Kombination aus den obengenannten metallorganischen Verbindungen und Übergangsmetallkomplexen, insbesondere Sandwich-Übergangsmetallkomplexen, bei denen ein vierwertiges Übergangsmetall über π-Bindungen an zwei gegebenenfalls substituierte Cyclopentadienyl-, Indenyl- oder Fluorenylliganden und über σ-Bindungen an zwei weitere Substituenten gebunden ist, enthalten. Die Übergangsmetallkomplexe können auch aus Halbsandwich-Strukturen ausgewählt sein, bei denen ein vierwertiges Übergangsmetall über eine π-Bindung an einen gegebenenfalls substituierten Cyclopentadienyl-, Indenyl- oder Fluorenylliganden und über σ-Bindungen an drei weitere Substituenten gebunden ist. Derartige Verbindungen, auch Metallocene genannt, sind dem Fachmann gut bekannt.

Die Strukturformel der Übergangsmetallverbindungen, die zur Verwendung bei der vorliegenden Erfindung in Betracht kommen, wird durch die folgende Formel erläutert:

Qₘ(CpRₐ)(Cp'R'_{a'})M(CH₃)ₙX₂₋ₙ,

worin Cp eine Cyclopentadienyl-, Indenyl- oder Fluorenylgruppe bedeutet; R und R' gleich oder verschieden sind und Wasserstoff, gegebenenfalls substituierte Alkyl- oder Arylgruppen mit 1 bis 12, bevorzugt 1 bis 8, Kohlenstoffatomen bedeuten; a und a' gleich oder verschieden sind und Zahlen von 0 bis 5 bedeuten; Cp' einen Cp-Liganden oder Stickstoff bedeutet mit der Maßgabe, daß für den Fall, daß Cp' Stickstoff bedeutet, die Gruppe R' eine Alkyl- oder Arylgruppe, a' = 1 und m = 1 bedeuten: Q eine Brückengruppe (R¹-Y-R²)_{b} zwischen Cp und Cp' bedeutet, wobei R¹ und R² entweder Wasserstoff, eine C₁ -C₁₀-Alkylgruppe oder eine C₆-C₁₀-Arylgruppe bedeuten; Y Kohlenstoff, Germanium oder Silicium, b eine Zahl von 1 bis 3, M ein Übergangsmetall der Gruppen 4, 5 oder 6 des Periodensystems, bevorzugt Hafnium, Titan oder Zirkonium; X ein Halogen; n eine Zahl von 0 bis 2 und m 0 oder 1 bedeuten.

Die Synthese dieser Metallocene kann nach bekannten Literaturvorschriften erfolgen.

Ein weiterer Gegenstand der Erfindung betrifft die Verwendung des erfindungsgemäßen Katalysatorsystems zur Polymerisation von ungesättigten Verbindungen. Dafür sind Olefine bevorzugt, jedoch kommen auch andere ungesättigte Monomere in Betracht, z. B. Acetylene, konjugierte und nichtkonjugierte Diene, Vinylhalogenide, Vinylether und Vinylester.

Die hervorragende Polymerisationsleistung des erfindungsgemäßen Katalysatorsystems ist in Tabelle 1 dargestellt.

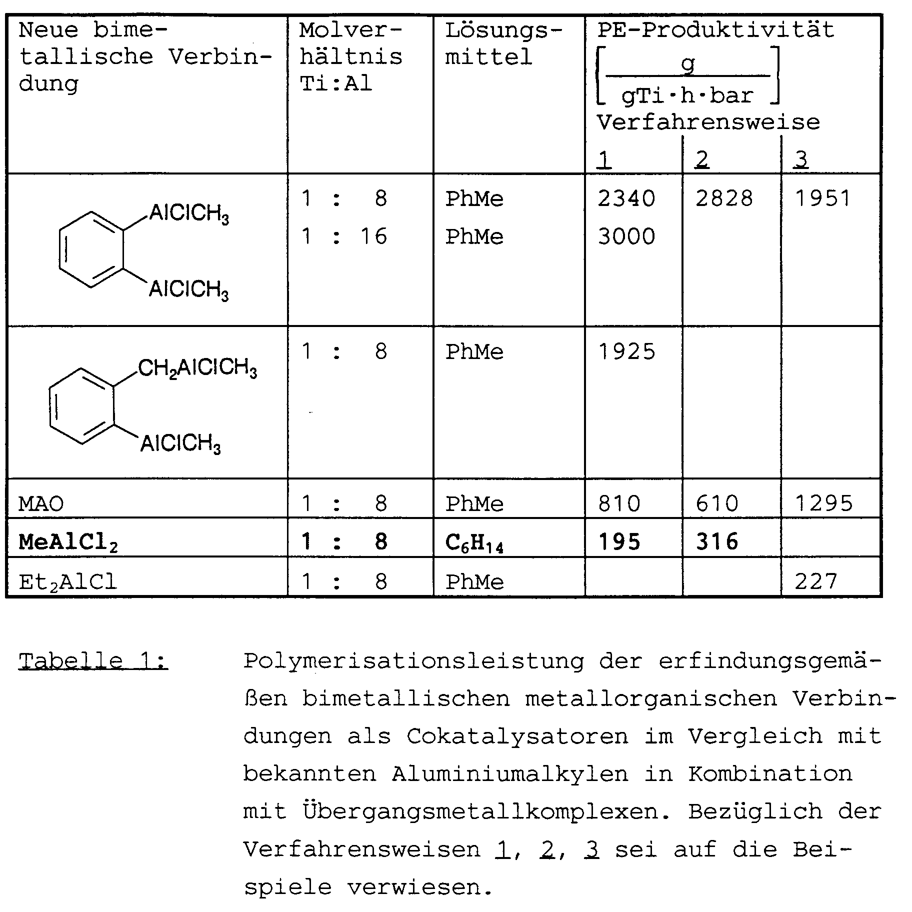

Diesen Werten ist zu entnehmen, daß die neuen, erfindungsgemäßen metallorganischen Verbindungen im Vergleich mit bekannten Aluminiumalkylen und insbesondere im Vergleich mit MAO bei vergleichbaren Ti : Al-Verhältnissen bessere Polymerisationsproduktivität ergeben.

Die nachfolgenden Beispiele sollen den Umfang der Erfindung näher erläutern. Sie dienen nur zur Erläuterung und sind nicht als Einschränkung der Erfindung zu betrachten.

Die nachfolgenden Beispiele behandeln die Synthese von neuen metallorganischen Verbindungen und ihre Anwendung bei der Polymerisation in Verbindung mit verschiedenen Übergangsmetallkomplexen.

Bei der vorliegenden Erfindung wurde nach drei verschiedenen Verfahrensweisen polymerisiert, die nachfolgend beschrieben sind.

### Verfahrensweise 1:

Hierbei wurde 1 mmol Dicyclopentadienyltitanchloromethyl (Methyltitanocenchlorid) in einem Gesamtvolumen von 100 mL wasserfreiem Lösungsmittel eingesetzt und ein Glasreaktor mit Magnetrührwerk verwendet. Die Umsetzung wurde bei Raumtemperatur begonnen und ohne Kühlung durchgeführt. Während der Polymerisation wurde ein Ethylendruck von 2,76 bar (40,03 psi) aufrechterhalten. Die Reaktionsdauer betrug 30 Minuten, wenn nicht die Menge an ausgefallenem Polymer einen früheren Abbruch der Polymerisation erforderlich machte. Die Reaktion wurde durch Zugabe von Methanol abgebrochen, die Polymersuspension filtriert und mit zusätzlichen Mengen an Ethanol und 6N wäßriger HCl gewaschen. Das erhaltene Polymer wurde bis zur Gewichtskonstanz getrocknet.

### Verfahrensweisen 2 und 3:

Hierbei wurden 0,225 mmol Methyltitanocenchlorid (Verfahrensweise 2) bzw. Dicyclopentadienyltitandichlorid (Titanocendichlorid) (Verfahrensweise 3) in einem Gesamtvolumen von 900 mL wasserfreiem Lösungsmittel eingesetzt, ein Reaktor aus rostfreiem Stahl mit mechanischem Rührwerk verwendet und bei einer konstanten Temperatur von 30 °C gearbeitet. Während der Polymerisation wurde ein Ethylendruck von 4,0 bar (58 psi) aufrechterhalten. Die Reaktionsdauer betrug 20 Minuten, wenn nicht die Menge an ausgefallenem Polymer einen früheren Abbruch der Polymerisation erforderlich machte. Die Reaktion wurde durch Unterbrechung der Ethylenzufuhr und Entspannen abgebrochen. Die Polymerausbeute wurde mit zusätzlichen Mengen an Toluol gewaschen und bis zur Gewichtskonstanz getrocknet.

### Beispiele

### Beispiel 1

### Herstellung von Bis(trimethylstannyl)methan (Typ 1):

Diese Substanz wurde in Anlehnung an die Literaturvorschrift von T. Sato u. a., Tetrahedron 47 (1991) 3281, synthetisiert.

31,35 g (100 mmol) Zinndibromid, 15,1 g (56,2 mmol) Diiodmethan und 4 Tropfen Triethylamin (als Katalysator) wurden unter Rühren bei 140 °C 17 Stunden lang reagieren gelassen. Nach dem Abkühlen des braunen Reaktionsgemischs auf 0 °C wurden langsam 104 ml (312 mmol) einer 3 M Methylmagnesiumbromid-Lösung in Diethylether zugegeben. Nach vollständiger Zugabe wurde die Lösung 1 Stunde lang am Rückfluß gehalten, auf Raumtemperatur abgekühlt und dann mit Eis hydrolysiert. Die Wasserschicht wurde einige Male mit einem Diethylether-Hexan-Gemisch extrahiert. Nach dem Trocknen der vereinigten organischen Schichten mit Natriumsulfat wurde das Lösungsmittel abgezogen. Die Vakuumdestillation des hellgelben Rückstands (16 Torr) ergab 8,9 g einer farblosen Flüssigkeit (Siedepunkt = 80 °C).
¹H-NMR (360,1 MHz, C₆D₆, 25°C, δ in ppm): -0,22 s (CH₂), 0,08 s (SnCH₃, ²J_{Sn-H}=50,7/53,0 Hz).
¹³C-NMR (90,6 MHz, C₆D₆, 25°C, δ in ppm): 10,0 (SnCH₃, ¹J_{Sn-C} =314,9/328,0 Hz), 17,2 (CH₂, ¹J_{Sn-C}=259,8/270,3 Hz).

### Beispiel 2

### Umsetzung von Bis(trimethylstannyl)methan ((CH₃)₃Sn)₂CH₂ mit Methylaluminiumdichlorid CH₃AlCl₂ zu Bis(chloro(methyl)alumino)methan (Typ I):

Zu 3,72 g (10,9 mmol) Bis(trimethylstannyl)methan wurden bei einer Temperatur von -10 °C langsam 21,8 ml (21,8 mmol) einer 1,0 M Methylaluminiumdichlorid-Lösung in Hexan gegeben. Nach vollständiger Zugabe wurde das Reaktionsgemisch auf Raumtemperatur erwärmen gelassen, woraufhin sich zwei Schichten bildeten. Nach Trennung der Phasen wurde die untere Schicht, ein gelbes Öl, einige Stunden lang am Vakuum gehalten, um Trimethylzinnchlorid-Rückstände vollständig zu entfernen.
¹H-NMR (360 MHz, Toluol, 25°C, δ in ppm): -0,38 br (1H), 0,63 s (1H), 0,85 br (6H).

### Beispiel 3

### Herstellung von 1,2-Bis(trimethylzinn)ethan ((CH₃)₃Sn)₂C₂H₄ (Typ II):

8,0 g (28,7 mmol) Zinndibromid, 1,4 ml (16 mmol) 1,2-Dibromethan und 4 Tropfen Triethylamin (als Katalysator) wurden unter Rühren bei 130 °C 18 Stunden lang reagieren gelassen. Nach dem Abkühlen des Reaktionsgemischs auf 0 °C wurden langsam 32 ml (96 mmol) einer 3 M Methylmagnesiumbromid-Lösung in Diethylether zugegeben. Nach vollständiger Zugabe wurde die Lösung 1 Stunde lang am Rückfluß gehalten, auf Raumtemperatur abgekühlt und dann mit Eis hydrolysiert. Die Wasserschicht wurde einige Male mit einem Diethylether-Hexan-Gemisch extrahiert. Nach dem Trocknen der vereinigten organischen Schichten mit Natriumsulfat wurde das Lösungsmittel abgezogen. Die Vakuumdestillation des Rückstands (10 Torr) ergab 0,3 g Produkt (Siedepunkt = 78 °C).

### Beispiel 4

### Umsetzung von 1,2-Bis(trimethylstannyl)ethan ((CH₃)₃Sn)₂C₂H₄ mit Methylaluminiumdichlorid CH₃AlCl₂ zu 1,2-Bis(chloro(methyl)alumino)ethan (Typ II):

Zu 0,3 g (0,84 mmol) Bis(trimethylstannyl)ethan wurden bei einer Temperatur von -10 °C langsam 1,7 ml (1,7 mmol) einer 1,0 M Methylaluminiumdichlorid-Lösung in Hexan gegeben. Nach vollständiger Zugabe wurde das Reaktionsgemisch auf Raumtemperatur erwärmen gelassen, woraufhin sich zwei Schichten bildeten. Nach Trennung der Phasen wurde die untere Schicht, ein gelbes Öl, am Vakuum gehalten, um Trimethylzinnchlorid-Rückstände vollständig zu entfernen.

### Beispiel 5

### Herstellung von 1,2-Bis(trimethylstannyl)benzol, 1,2-C₆H₄(Sn(CH₃)₃)₂ (Typ III):

Eine Suspension von 3,4 g (141 mmol) Magnesium in 30 ml THF wurde unter Ultrabeschallung mit einem Gemisch aus 50 ml (50 mmol) einer 1,0 M Trimethylzinnchlorid-Lösung in THF und 3,0 mL (25 mmol) 1,2-Dibrombenzol versetzt. Das erhaltene Reaktionsgemisch wurde 3 Tage lang gerührt, das Lösungsmittel im Vakuum abgedampft und der Rückstand mit 100 ml Pentan extrahiert. Die Pentanlösung wurde filtriert und das Lösungsmittel abgezogen. Die Vakuumdestillation des Rückstands (0,15 Torr) ergab 6,0 g (14,9 mmol) farbloses Öl (Siedepunkt = 80 -95 °C).
¹H-NMR (360,1 MHz, C₆D₆, 25°C, δ in ppm): 0,28 s (SnCH₃), 7,12 m - 7,21 m (C₆H₄), 7,49 - 7,54 m (C₆H₄).
¹³C-NMR (90,6 MHz, C₆D₆, 25°C, δ in ppm): -7,0 (SnCH₃), 128,3 (C₆H₄), 137,3 (C₆H₄), 151,6 (C₆H₄).

### Beispiel 6

### Umsetzung von 1,2-Bis(trimethylstannyl)benzol, C₆H₄(Sn(CH₃)₃)₂ mit Methylaluminiumdichlorid CH₃AlCl₂ zu 1,2-Bis(chloro(methyl)alumino)benzol (Typ III):

Eine Lösung von 570 mg (1,4 mmol) 1,2-Bis(trimethylstannyl)benzol in 4 ml Toluol wurde bei Raumtemperatur mit 2,8 ml (2,8 mmol) einer 1,0 M Methylaluminiumdichlorid-Lösung in Hexan versetzt. Nach 3tägigem Rühren wurden die Lösungsmittel im Vakuum abgedampft. Der Rückstand wurde zur Entfernung aller flüchtigen Substanzen im Vakuum bis auf 50 °C erwärmt. Der erhaltene Rückstand, ein hellgelber Wachs, wurde NMR-spektroskopisch untersucht.
¹H-NMR (360,1 MHz, C₆D₆, 25°C, δ in ppm): 0,25 br (AlCH₃≈ 1,7H), 0,8 br (AlCH₃≈3 8H), 6,8 - 7,3 m, br (C₆H₄≈3,1 H), 7,4 - 7,9 m, br (C₆H₄, 2,0 H).
¹³C-NMR (90,6 MHz, C₆D₆, 25°C, δ in ppm): -6,6 (AlCH₃), 4,3 br (AlCH₃), 129,5 br (C₆H₄), 137,0 (C₆H₄), 150,4 (C₆H₄).
²⁷Al-NMR (78,2 MHz, C₆D₆, 25°C, δ in ppm): 101 (W$\frac{\text{1}}{\text{2}}$ = 5000 Hz).

### Beispiel 7

### Herstellung von α,2-Bis(trimethylstannyl)toluol, o-(CH₃)₃SnC₆H₄CH₂Sn(CH₃)₃:

Eine Suspension von 5,0 g (208 mmol) Magnesium in 100 ml THF wurde innerhalb von 3 Stunden mit einem Gemisch aus 18,1 g (91 mmol) Trimethylzinnchlorid und 11,35 g (45,5 mmol) o-Brombenzylbromid in 100 ml THF versetzt. Nach vollständiger Zugabe wurde das erhaltene braune Reaktionsgemisch 1 Stunde lang am Rückfluß gehalten, auf Raumtemperatur abkühlen gelassen und anschließend mit Eis hydrolysiert. Die Wasserschicht wurde einige Male mit einem Diethylether-Hexan-Gemisch extrahiert. Nach dem Trocknen der vereinigten organischen Schichten mit Natriumsulfat wurde das Lösungsmittel abgezogen. Die Vakuumdestillation des Rückstands (0,15 Torr) ergab 4,7 g farblose Flüssigkeit (Siedepunkt = 110 - 117 °C).
¹H-NMR (360,1 MHz, C₆D₆, 25°C, δ in ppm): 0,05 s (SnCH₃), 0,30 s (SnCH₃), 2,40 s (CH₂), 6,9-7,4 m (C₆H₄).
¹³C-NMR (90,6 MHz, C₆D₆, 25°C, δ in ppm): -9,5 (SnCH₃), -8,1 (SnCH₃), 24,2 (CH₂), 123,6 (C₆H₄), 126,8 (C₆H₄), 129,2 (C₆H₄), 136,7 (C₆H₄), 138,7 (C₆H₄), 149,8 (C₆H₄).

### Beispiel 8

### Umsetzung von α,2-Bis(trimethylstannyl)toluol, o-(CH₃)₃SnC₆H₄CH₂Sn(CH₃)₃ mit Methylaluminiumdichlorid CH₃AlCl₂ zu α,2-Bis(chloro(methyl)alumino)toluol (Typ III):

Zu 22,5 ml (22,5 mmol) einer 1,0 M Methylaluminiumdichlorid-Lösung in Hexan wurden bei einer Temperatur von -5 °C langsam 4,7 g (11,26 mmol) α,2-Bis(trimethylstannyl)-toluol gegeben. Nach vollständiger Zugabe wurde das gelbe Reaktionsgemisch auf Raumtemperatur erwärmen gelassen, woraufhin sich zwei Schichten bildeten. Die untere Schicht, ein braunes Öl, bestand hauptsächlich aus nichtumgesetztem Ausgangsmaterial. Nach Abtrennung der oberen Schicht und Abdampfen des Lösungsmittels blieb ein braunes Öl zurück. Das Öl wurde zur Entfernung von Trimethylzinnchlorid-Rückständen zwei Stunden lang am Vakuum gehalten.
¹H-NMR (360,1 MHz, Toluol, 25°C, δ in ppm): -0,35 br (AlCH₃), 6,5 - 7,25 (C₆H₄).

### Beispiel 9

### Herstellung von 1,2-Dilithiobenzol, o-C₆H₄Li₂ (Typ III):

Eine Lösung von 6,0 g (14,9 mmol) 1,2-Bis(trimethylstannyl)benzol in 20 ml Pentan wurde bei einer Temperatur von -78 °C 18,6 ml (29,8 mmol) mit einer 1,6 M n-Butyllithium-Lösung in Hexan versetzt. Das Reaktionsgemisch wurde auf Raumtemperatur erwärmt und 2 Tage lang gerührt. In diesem Zeitraum bildete sich ein weißer Niederschlag, der abfiltriert, mit 10 ml Pentan gewaschen und im Vakuum getrocknet wurde. So wurden 1,27 g (14,1 mmol) Produkt erhalten.

### Beispiel 10

### Herstellung von 1,2-Bis(dimethylalumino)benzol, o-C₆H₄(Al(CH₃)₂)₂ (Typ III):

Eine Suspension von 1,68 g (18,7 mmol) 1,2-Dilithiobenzol in 20 ml Toluol wurde mittels einer Spritze bei Raumtemperatur mit 3,5 ml (37,5 mmol) reinem Dimethylaluminiumchlorid versetzt. Nach 3tägigem Rühren des erhaltenen gelben Reaktionsgemischs wurde der gebildete Niederschlag abfiltriert und das gelbe Öl NMR-spektroskopisch als das gewünschte Produkt identifiziert. So wurden 1,57 g Produkt erhalten.
¹H-NMR (360,1 MHz, C₆D₆, 25°C, δ in ppm): -0,41 br (AlCH₃), -0,32 br (AlCH₃), 6,96 dd (C₆H₄), 7,96 dd (C₆H₄).
¹³C-NMR (90,6 MHz, C₆D₆, 25°C, δ in ppm): -7,7 (AlCH₃), -6,4 br (AlCH₃), 129,7 (C₆H₄), 144,9 (C₆H₄), 160,3 (C₆H₄).
²⁷Al-NMR (78,2 MHz, C₆D₆, 25°C, δ in ppm): 15°C: 174 (W$\frac{\text{1}}{\text{2}}$ = 3200 Hz), -8°C: 179 (W$\frac{\text{1}}{\text{2}}$ = 5200 Hz).

Polymerisationsbeispiele unter Einsatz der neuen und herkömmlichen Aluminium-Cokatalysatoren mit Methyltitanocenchlorid

### Beispiel 11

Gemäß Verfahrensweise 1 wurden 4,0 mmol 1,2-Bis(chloro(methyl)alumino)benzol eingesetzt (Ti:Al = 1 : 8), und die Reaktionsdauer betrug 20 Minuten, wonach das ausgefallene Polymer nicht mehr gerührt werden konnte. Die Ausbeute an hergestelltem Polyethylen (PE) betrug 10,14 g (Siedepunkt 130 - 134 °C) und die Produktivität 2,34 kg PE/g Ti·h·bar.

### Beispiel 12

Gemäß Verfahrensweise 1 wurden 4,0 mmol 1,2-Bis(chloro(methyl)alumino)benzol eingesetzt (Ti : Al = 1 : 16), und die Reaktionsdauer betrug 15 Minuten, wonach das ausgefallene Polymer nicht mehr gerührt werden konnte. Die Polyethylenausbeute betrug 9,75 g (Siedepunkt = 130 - 134 °C) und die Produktivität 3,00 kg PE/g Ti·h·bar.

### Beispiel 13

Gemäß Verfahrensweise 1 wurden 4,0 mmol α,2-Bis(chloro(methyl)alumino)toluol eingesetzt (Ti:Al = 1 : 8), und die Reaktionsdauer betrug 30 Minuten. Die Polyethylenausbeute betrug 12,53 g (Siedepunkt 130 - 135 °C) und die Produktivität 1,93 kg PE/g Ti·h·bar.

### Beispiel 14

Gemäß Verfahrensweise 1 wurden 4,0 mmol 1,2-Bis(chloro(methyl)alumino)ethan eingesetzt (Ti:Al = 1:8), und die Reaktionsdauer betrug 30 Minuten. Die Polyethylenausbeute betrug 3,58 g (Siedepunkt = 130 - 135 °C) und die Produktivität 0,55 kg PE/g Ti·h·bar.

### Beispiel 15

Gemäß Verfahrensweise 1 wurden 4,0 mmol Bis(chloro(methyl)alumino)methan eingesetzt (Ti : Al = 1 : 8), und die Reaktionsdauer betrug 30 Minuten. Die Polyethylenausbeute betrug 1,63 g (Siedepunkt 130 - 133 °C) und die Produktivität 0,25 kg PE/g Ti·h·bar.

### Vergleichsbeispiel 16

Gemäß Verfahrensweise 1 wurden 8,0 mmol MAO in Toluol (mit 13,2 Gew.-% Al und einer Konzentration von 30 Gew.-%) eingesetzt, und die Reaktionsdauer betrug 30 Minuten. Die Polyethylenausbeute betrug 5,29 g (Siedepunkt = 129 - 142 °C) und die Produktivität 0,81 kg PE/g Ti·h·bar.

### Vergleichsbeispiel 17

Gemäß Verfahrensweise 1 wurden 8,0 mmol Methylaluminiumdichlorid eingesetzt, und die Reaktionsdauer betrug 30 Minuten. Die Polyethylenausbeute betrug 1,10 g (Siedepunkt = 130 - 133 °C) und die Produktivität 0,17 kg PE/g Ti·h·bar.

## Patentansprüche

1. Metallorganische Verbindung mit einer der folgenden Strukturformel: 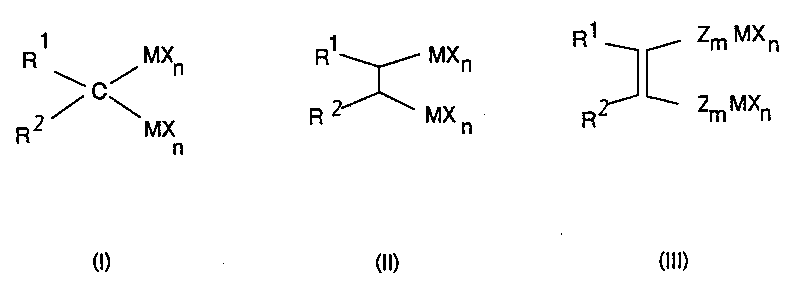 worin M ein zweiwertiges, dreiwertiges oder vierwertiges Metall der Gruppen 2, 13 oder 14 des Periodensystems; R¹ und R² unabhängig Wasserstoff oder gegebenenfalls weiter substituierte, langkettige, ver-zweigte oder cyclische Alkylgruppen oder ein cycli-sches Gerüst, bei dem R¹ und R² eine gegebenenfalls gesättigte, ungesättigte, substituierte oder unsubstituierte cyclische Struktur bilden; X Halogen oder eine gegebenenfalls substituierte Methylgruppe, Alkylgruppe oder eine gegebenenfalls substituierte Phenyl- oder Benzylgruppe; n bei zweiwertigen Metallen 1, bei dreiwertigen Metallen 2 und bei vierwertigen Metallen 3; Z eine Methylengruppe (-CH₂-) und m unabhängig 0, 1 oder 2 bedeuten.

2. Metallorganische Verbindung nach Anspruch 1, wobei M Al, Mg, B oder Sn bedeutet.

3. Metallorganische Verbindung nach Anspruch 2, wobei M Al bedeutet.

4. Verfahren zur Synthese der metallorganischen Verbindungen gemäß Anspruch 1, bei dem man:
a) einen gesättigten, ungesättigten oder aromatischen Kohlenwasserstoff mit mindestens zwei Halogensubstituenten, die an das gleiche Kohlenstoffatom (geminal) oder an benachbarte Kohlenstoffatome (vicinal) oder an Kohlenstoffatome, die durch ein oder mehr Kohlenstoffe voneinander getrennt sind, gebunden sind, in einem Ether als Lösungsmittel mit Magnesium umsetzt oder den halogenierten Kohlenwasserstoff in einem Ether oder Kohlenwasserstoff als Lösungsmittel mit metallischem Lithium oder einer Lithiumalkylverbindung umsetzt, um ein Magnesium- oder Lithium-Zwischenprodukt bereitzustellen, das man in situ durch Metall-Metall-Austauschreaktionen mit entsprechenden Bor-, Zinn- oder Siliciumreaktanden in ein Bor-, Zinn- oder Siliciumderivat überführt;
b) das Bor-, Zinn- oder Siliciumderivat durch eine entsprechende Substitutionsreaktion in die metallorganische Verbindung überführt und
c) die metallorganische Verbindung durch fraktionierte Destillation oder Umkristallisieren isoliert.

5. Katalysatorsystem zur Polymerisation von ungesättigten Monomeren, enthaltend eine metallorganische Verbindung gemäß Anspruch 1 und einen Übergangsmetallkomplex der Formel:
Qₘ(CpRₐ)(Cp'R'_{a'})M(CH₃)ₙX₂₋ₙ,
worin Cp eine Cyclopentadienyl-, Indenyl- oder Fluorenylgruppe bedeutet; R und R' gleich oder verschieden sind und Wasserstoff, gegebenenfalls substitu-ierte Alkyl- oder Arylgruppen mit 1 bis 12 Kohlenstoffatomen bedeuten; a und a' gleich oder verschieden sind und Zahlen von 0 bis 5 bedeuten; Cp' einen Cp-Liganden oder Stickstoff bedeutet mit der Maß-gabe, daß für den Fall, daß Cp' Stickstoff bedeutet, die Gruppe R' eine Alkyl- oder Arylgruppe, a' = 1 und m = 1 bedeuten; Q eine Brückengruppe (R¹-Y-R²)_{b} zwischen Cp und Cp' bedeutet, wobei R¹ und R² entweder Wasserstoff, eine C₁-C₁₀-Alkylgruppe oder eine C₆-C₁₀-Arylgruppe bedeuten; Y Kohlenstoff, Germanium oder Silicium, b eine Zahl von 1 bis 3, M ein Übergangsmetall der Gruppen 4, 5 oder 6 des Periodensystems; X ein Halogen; n eine Zahl von 0 bis 2 und m 0 oder 1 bedeuten.

6. Katalysatorsystem nach Anspruch 5, wobei M Hafnium, Titan oder Zirkonium bedeutet.

7. Katalysatorsystem nach Anspruch 6, wobei M Titan bedeutet.

8. Katalysatorsystem nach Anspruch 5, wobei es sich bei dem Übergangsmetallkomplex um Methyltitanocenchlorid oder Titanocendichlorid handelt.

9. Verfahren zur Polymerisation von ungesättigten Monomeren, bei dem man das Katalysatorsystem gemäß Anspruch 5 zur Niederdruck-Suspensionspolymerisation und -Lösungspolymerisation in einem chlorierten, nichtchlorierten oder aromatischen Kohlenwasserstoff als Lösungsmittel einsetzt.

10. Verfahren nach Anspruch 9, bei dem man als ungesättigtes Monomer ein Olefin, ein Acetylen, ein konjugiertes oder nichtkonjugiertes Dien oder ein Vinylhalogenid, einen Vinylether oder einen Vinylester einsetzt.
